(19)

Europäisches Patentamt

European Patent Office

Office européen des brevets

(11) **EP 3 188 088 A1**

(12) **EUROPEAN PATENT APPLICATION**

(43) Date of publication:
**05.07.2017 Bulletin 2017/27**

(51) Int Cl.:
*G06Q 10/00* (2012.01)     *G06Q 50/00* (2012.01)

(21) Application number: **16002577.1**

(22) Date of filing: **02.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.12.2015  IL 24342915**

(71) Applicant: **Deutsche Telekom AG
53113 Bonn (DE)**

(72) Inventors:
• **Zilberman, Polina**
  8537700 Eshkolot (IL)
• **Puzis, Rami**
  7748707 Ashdod (IL)
• **Nacshon, Luiza**
  8706811 Sderot (IL)

(74) Representative: **Graf von Stosch, Andreas
Graf von Stosch
Patentanwaltsgesellschaft mbH
Prinzregentenstraße 22
80538 München (DE)**

(54) **A METHOD FOR IDENTIFYING BOOSTING USERS IN SOCIAL MEDIA**

(57)     The invention relates to a method for determining post-boosting users in social networks, which comprises the steps of: (a) defining plurality of time slots $S$; (b) defining redistribution of author posts where an author post is denoted by $P_x$ and a redistributing of said author post either directly or indirectly is denoted by $P_y$; (c) for a specific author post, determining the number of redistributions of this author post, respectively, within each of one or more time slots that follow the time of posting of $P_x$; (d) calculating a *Redistribution-Score* for each specific author post $P_x$ based on the number of following redistributions of this author post; (e) granting a *User-Score* to respective non-author users based on said calculated *Redistribution-Score*; (f) repeating over time said steps (c) - (e), for additional author posts; and (g) identifying each non-author user that over time accumulated a *User-Score* above a predefined level as a boosting user.

Fig. 1

## Description

### Field of Invention

The invention generally relates to the field of social networks. More specifically, the invention relates to a method for determining a boosting user in terms of distributing a post in the social media.

### Background of the Invention

In recent years, the dynamics in social media platforms and web forums influence the popularity of commercial organizations. For example, A considerable backlash ("fireflame") from the public may result in a damage to the reputation of a company and to its sales. A prompt identification a "fire" and an issuing of a correct response at the initial stage of the "fire" can facilitate and minimize the damage. Hereinafter, the term "fire" is used to resemble a fast expansion of a damaging post within social networks.

Typically, it is desired to determine already at the initial stage of a "fire" whether users, who are known to have the potential of causing the expansion of the "fire", are indeed a part of this "fire" expansion. Non-author users (i.e., users that redistribute a post which was originally created by another author) with such a potential are those that by referencing a post that create a buzz over this post. Such users will be referred herein as *boosting users.*

Lee, Kwak, Park, & Moon, Lee, C., Kwak, H., Park, H., & Moon, S. (2010), "Finding Influentials Based on the Temporal Order of Information Adoption In Twitter", Proceedings of the 19th international conference on World wide web, ACM, propose finding influentials by considering both the link structure and the temporal order of information adoption in Twitter. The authors propose a measure according to which a user is considered influential if many readers have been exposed to the information for the first time through the user's tweet.

Bakshy, E., Hofman, J. M., Mason, W. A., & Watts, D. J. (2011), "Everyone's an Influencer: Quantifying Influence on Twitter", Proceedings of the Fourth, ACM International Conference on Web Search and Data Mining, use regression tree model to find individuals that influence others to repost their tweets. The features used as predictors are: number of followers, number of friends, number of tweets, date of joining, and past influence of users. Past influence refers to the average number of reposts by a user's immediate followers in the first month of the observation period, and past total influence refers to average total cascade size over the same period.

Sun, B., & Ng, V. T. (2013), "Identifying Influential Users by Their Postings in Social Networks, Ubiquitous Social Media Analysis (pp. 128-151). Springer Berlin Heidelberg, propose identifying influential users by firstly identifying influential posts. The influence of online posts is measured through a refined graph entropy approach. In addition, the methods of Degree Measure and Shortest-path Cost Measure are exploited and integrated. The posts graph is transformed to users graph. Finally, the authors define centrality measures that are used to estimate the influence of users.

Although all the above methods may determine influential users to some degree, still none of said techniques is capable of identifying influential users by applying temporal analysis on the time of posting (and\or re-posting and\or referencing) feature only. In other words, our work is the first to base the identification of influencing users only on the rate in which other users referenced the same post.

It is therefore an object of the present invention to provide a method for identifying influencing (i.e., boosting) users at the initial stage of a "fire".

It is another object of the invention to provide a method for identifying influencing users, which ignores the content of the post itself.

It is still another object of the invention to provide a method for identifying influencing (i.e., boosting), which uses minimal data from pages of the involved users.

Other objects and advantages of the invention will become apparent as the description proceeds.

### Summary of the Invention

The invention relates to a method for determining post-boosting users in social networks, which comprises the steps of: (a) defining plurality of time slots $S$; (b) defining redistribution of author posts where an author post is denoted by $P_x$ and a redistributing of said author post either directly or indirectly is denoted by $P_y$; (c) for a specific author post, determining the number of redistributions of this author post, respectively, within each of one or more time slots that follow the time of posting of $P_x$; (d) calculating a *Redistribution-Score* for each specific author post $P_x$ based on the number of following redistributions of this author post; (e) granting a *User-Score* to respective non-author users based on said calculated *Redistribution-Score*; (f) repeating over time said steps (c) - (e), for additional author posts; and (g) identifying each non-author user that over time accumulated a *User-Score* above a predefined level as a boosting user.

In a first embodiment of the invention, said *Redistribution-Score* is computed by: (a) defining a JUMP rate, namely a rate of fast increase in a number of redistributions of said author post; (b) determining the number of redistributions $P_y$ of each author post $P_x$, respectively, within each time slot; and (c) upon identification of a large increase in the number of redistributions $Py$ of said author post $P_x$ above said JUMP rate within a time slot $Si$, identifying all those non-author users that redistributed the author post $P_x$ during the previous slot $S_{i-1}$, and granting a *User-Score* to each of said identified users, while terminating the grant of *User-Scores* for said specific author post $P_x$ in all succeeding time slots.

According to a second embodiment of the invention, said *Redistribution-Score* is calculated by: (a) for each specific post $P_x$, inspecting the number of redistributions $P_y$ within each time slot from several time slots that succeed the time of issuance of $P_x$; and (b) increasing the value of said *Redistribution-Score* in a combined manner which is (i) directly proportional to the number of redistributions $Py$ in one or more of time slots that succeed the time slot for which said *Redistribution-Score* is calculated; and (ii) inversely proportional to the duration that was passed since the time of posting of $P_x$.

In an embodiment of the invention, the method of the invention is performed on a ready to use database, which is accumulated from a past analysis.

In an embodiment of the invention, the database is at least partially prepared by means of crawling software.

In an embodiment of the invention, the durations of the time slots are increased over the time that was passed since the time of posting of the author post $P_x$.

In an embodiment of the invention , the accumulation of *User-Scores* in step (f) is involves summation or average.

## Brief **description of the Drawings**

In the drawings:

- Fig. 1 illustrates in a block diagram form the method of the invention;
- Fig. 2 provides a list of users with the highest User-Score, as calculated for a case where the users receive constant bonus; and
- Fig. 3 provides a list of users with the highest User-Score, as calculated for a case where the users receive a score which averages the number of redistributions of a post over the number of time slots passed since $S_{i-1}$.

## Detailed Description of Preferred Embodiments of the Invention

As noted above, the object of the present invention is to identify influencing (boosting) users.

Definitions

A. Bob is a boosting user if the following scenario occurs repeatedly:

1. Bob publishes a post *q* which includes a reference to a post *p* of another user. Note, that up to the stage of Bob's publication, post *p* is not viral.
2. Following the redistribution of post *p* (by Bob and by other users), post *p* becomes viral.

B. A post *q* is considered a boosting post of a post *p* (that *q* references), if the publishing of *q* was followed by a boost (i.e., a sharp increase) in the referencing (or re-posting) rate of *p*. Consequently, Bob is a boosting user, i.e. a user with a high impact, if he is the author of plurality of boosting posts (such as post *q*).

As will be demonstrated hereinafter, the present invention quantifies the impact of users using temporal analysis of the references to posts.

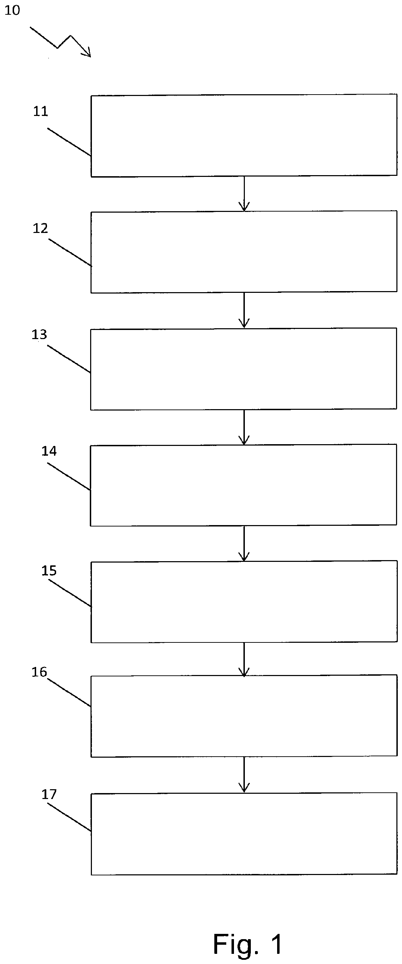

Fig. 1 describes in a general block diagram form the method for determining a boosting user, according to the present invention. At the first step 11, a plurality of time slots are defined. As will be discussed in more details hereinafter, the time slots may be either identical, or in growing durations, such as 1, 3, 6, 10, 15, 21....minutes. In step 12, an author post (the term "author post" relates to a single creation by an original author, as originally posted by the author for the first time) is denoted by $P_x$ and a redistributing of said author post, either directly or indirectly (i.e., redistribution of a redistributed post), is denoted by $P_y$. In step 13, one or more of relatively early time slots that follow the time of issuance of a specific author post $P_x$ are examined. More particularly, the number of redistributions $Py$ of said author post $P_x$ in each of one or more time slots that follow the time of issuance of post $P_x$ is determined respectively. In step 14, a *Redistribution-Score* is calculated for each of said one or more time slots that are examined in step 13. In step 15, a *User-Score* is granted to the users within based on said calculated *Redistribution-Score*. In step 16, the procedure of steps 13-15 is repeated for additional author posts over time while the scores that the various users receive are summarized, and in step 17 those users that accumulated over time a high *User-Score* (e.g. above a predefined value) are identified as boosting users.

In a first embodiment of the invention, the steps 13-17 are performed as follows: (a) a JUMP level is defined. The JUMP level may be defined as an increase by at *least n* post-duplications (i.e., "redistributions") of post $p$ during a time slot, relative to one or more previous time slots. Alternatively, A JUMP may be defined as an increase by d% in the duplications (i.e., redistributions by users) of $p$ during a specific time slot, relative to the number of redistributions in one or more previous time slots; (b) The number $n$ of duplications of each post, respectively, is counted during several time slots that succeed the time of posting of $P_x$; (c) At the end of each time slot $S_i$, a comparison is made between the total number $n$ of the current duplications of $p$ relative to the number of duplications of $p$ during previous time slots $S_1 - S_{i-1}$; (d) If an increase above said predefined JUMP level is observed for a time slot $Si$, all those users that re-distributed the post p during the time slot $S_{i-1}$, receive "score bonus" B; (e) As noted, the procedure repeats for additional author posts; and (f) each user who receives over time a score above a predefined level is considered as a boosting user.

According to a second embodiment of the invention, steps 13-17 are performed as follows: (a) for each specific post $P_x$, inspecting the number of redistributions $P_y$ within each time slot from several time slots that succeed the time of issuance of $P_x$; and (b) increasing the value of said *Redistribution-Score* in a combined manner which is (i) directly proportional to the number of redistributions $P_y$ in the one or more time slots that succeed the time slot for which said *Redistribution-Score* is calculated; and (ii) inversely proportional to the duration that was passed since the time of posting of $P_x$.

### Example and Further Discussion

A database that follows the following schema has been analyzed. Each record included at least the following data:

    1. A unique identifier for each post;
    2. The Post URL;
    3. The Date of Publication of each post;
    4. The author of each post; and
    5. The URLs of all the following that referenced posts.

Said database was created based on crawling over time of social media in the web, and was processed to include a link expansion, i.e. translation of each URL in the references to a respective final form. For example, a "bit.ly" shortened link has been expanded to its final destination, so that several "bit.ly" links pointing to the same URL has not been considered as different URLs.

Furthermore, the following pre-processing has been performed:

    1. Preparation of reverse pointers *(PointingRecords)* - a dictionary where the key is a referenced (pointed at) post p and the value is a list of records pointing at (referencing) p. A *PointingRecord* represents a referencing post; holds the author of the referencing post, the date that the referencing post was published, and its unique ID.
    2. For each post *p,* a set of growing *Timeslots* have been defined:

        o *Timeslot* - represents a time window that starts at *start_time* and ends at *end_time.*
        o $t_1$.*start_time* is the time of the first reference to p.
        o The time slots in minutes were defined as follows: 1, 3, 6, 10, 15, 21, 28, ... , $a_{n+1} = an + n$

The high resolution in the first time slot enabled catching the trends when most actions occurred.

    3. Preparation of a dictionary *post_timeslot_users* - a data-structure that holds for each post $p$ a dictionary where the key is a Timeslot $t$ and the value is a set of users that referenced $p$ in $t$. If a user referenced $p$ in more than one timeslot, the user was recorded only in the first timeslot. *post_timeslot_users: {post → timeslot → set of users}.*

The following procedure was applied:

When a user *A* referenced a *post p* at a time window *t,* and when at time window *t*+1 a "jump" in the number of references to post $p$ have been detected, the "jump" was verified as whether it is above a predefined jump threshold *boost_jump.* When the JUMP has been found to be higher than the threshold *boost_jump,* all the users that redistributed the post $p$ were rewarded a score. More specifically:

- For each post $p$, a dictionary *timeslot_to_referencing_users* was constructed. The key was a time slot $t$ and the value was a set of users that referenced $p$ at time window $t$. Note that each user appeared only at the first time slot where he referenced a post $p$. For example, when a user referenced a post $p$ several times (at different time slots, or within a same time slot, the user appeared only once, i.e., at the earliest time slot where he introduced a reference to $p$.
- For each post $p$, the dictionary constructed such that {time window $t \rightarrow$ set(*users*)}, where $t$ is a time window that was followed by a "jump" in the number of references that succeeded the time slot, namely {$t$ | len([$t$+1] $\rightarrow$*users*)-len([$t$]$\rightarrow$*users*)> *boost_jump*}.
- When a JUMP was detected at a time slot $S_i$ for a post $p$, a "boosting counter" was increased for all the users that referenced the post p in a time slot $S_{i-1}$.

To compute the impact of user $A$ on the popularity of a post $p$, an array *timeslots_accumulated_counts* was constructed. This array held for each time window $t$, all the distinct users that referenced $p$ until (and including) time window $t$.

In order to eliminate the impact of users who are promotion bots, the following procedure was applied:

1. In the case of a post $p$, that was referenced only by a bot $x$ that in turn referenced the post $p$ every timeslot, and a human user $A$ that referenced $p$ at the 10$^{th}$ timeslot $t_{10}$:

   a) *timeslots_accumulated_counts* ignored all $x$'s references except for the first one, therefore:
   b) The score of each of $x$'s references published before $t_{10}$, accounted only $A$'s reference while ignoring $x$'s references.
   c) The score of each of $x$'s references published from $t_{10}$ onward was zero, since there were no legitimate references to account for at t > $t_{10}$.
   d) The score of $A$'s reference (published at $t_{10}$) was also zero.

2. To avoid inflating $x$'s boost impact score by the multiple scores of its references to $p$, and to "punish" $x$ for multiple references to $p$, only the average score among the scores of $x$'s references to p was accounted.

In the experiment, the following formula was applied ($PA_1$ indicates publication of post $A_1$, which in turn redistributes post $x$):

$$\text{Redistribution-Score } (PA_1 \rightarrow P_x) = \sum_{t > t(PA_1)} \frac{\text{accum}(p, t) - \text{accum}(p, t(PA_1))}{(t.\text{end\_time} - t(PA_1).\text{end\_time})^2}$$

In such a manner, redistributions that were closer to the exponential "explosion" (i.e., to the sharp increase in the number of total number redistributions) of a post had been considered to have more impact on the post p dissemination. The score of a reference at $t_1$ was higher than the score of a reference at $t_3$.

The inventors investigated in the experiment two embodiments for a user's impact score:

1. <u>Sum of all reference's scores for user $A$.</u> In this embodiment, the inventors gave significance to the number of distinct references (i.e., references to different posts) for which user A has received a score as being a possible boosting user. Note that if $A$'s references had low scores - in order to accumulate a high score (and to be considered a boosting user) $A$ needs to reference many posts.

$$\text{User-Score}(A) = \sum_{\text{post } p} \text{AVG}\{PA \rightarrow p \mid \text{Redistribution-Score}(PA \rightarrow p)\}$$

For example, if user $A$ is the author of posts $PA_1$ and $PA_2$, while $PA_1$ references previous posts $P_x$ and $Py$, and $PA_2$ references previous posts $P_y$, then the *impact score* of user $A$ is the aggregation over the impact scores of his several redistributions. More specifically, the impact score of a user $A$ is an aggregation over the scores of redistributions $PA_{1 \rightarrow}P_x$, $PA_1 \rightarrow P_y$, and $PA_2 \rightarrow P_y$, or: User-Score($A$)= AVG(Redistribution -Score($PA_1 \rightarrow P_y$), Redistribution -Score($PA_2$-$P_y$)) + Redistribution -Score ($PA_1$-$P_x$)

2. <u>Average of all of the $A$'s reference's scores.</u> In this case, there is almost no significance to the number of $A$'s distinct references (references to different posts). Posting many references will not make a user a boosting one.

$$\text{UserScore}(A) = \text{AVG}\left\{\text{post } p \mid \text{AVG}\left\{PA \rightarrow p \mid \text{Redistribution-Score}(PA \rightarrow p)\right\}\right\}$$

For the case of user *A* as described in section 1 above, the impact score of user *A* is computed as follows:

$$\text{User-Score}(A) =$$

$$\text{AVG}\left(\text{AVG}\left(\begin{array}{c}\text{Redistribution-Score}(PA_1 \rightarrow P_y), \\ \text{Redistribution-Score}(PA_2 \rightarrow P_y) \\ \text{Redistribution-Score}(PA_1, P_x)\end{array}\right)\right)$$

The results of the experiment were summarized in a table as follows: record:

- *user-* the user's name
- *boosting_timeslots_participation_count- the* number of posts that the user "boosted" according to the "jump" heuristic.
- *count_of_users_refering_boosted_posts-* the number of users that also referenced posts "boosted" (according to the "jump" heuristic) by the user.
- *num_of_referencing_posts-* the number of posts (published by the user) that contain references.
- *num_of_referenced_posts-* the number of different posts referenced by the user.
- *references_scores-* a string of the user's references' scores separated by pipelines ('|').
- *scores_sum-* the user's total impact score.
- *scores_avg-* the user's average impact score.
- *scores_std-* the standard deviation of the user's references'.

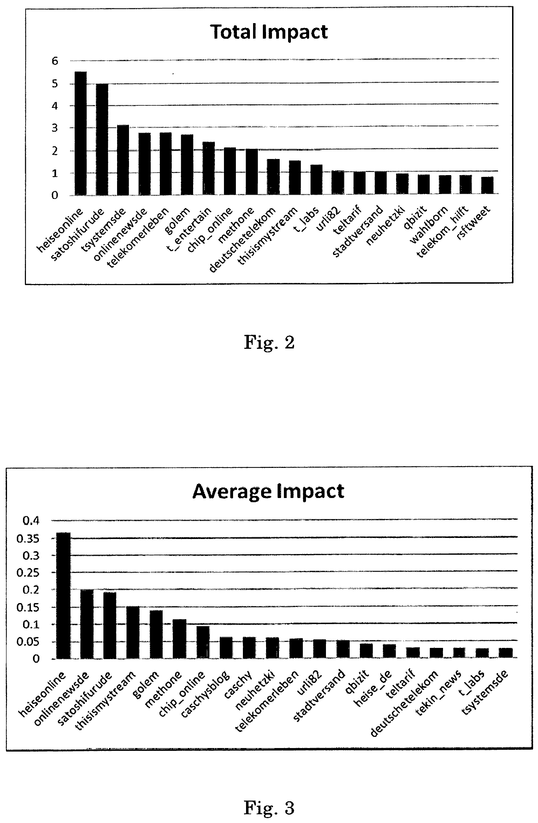

The following results were obtained using a dataset of posts from March 2015, that were received from a crawling service. When processing the results the inventors filtered out users with less than 10 referencing posts (i.e. posts that contain references to other, distinct, posts). Figure 2 presents the 20 users with the highest total User-Score. Figure 3 presents the 20 users with the highest average User-Score. The User-Score was calculated for all users that published at least one post that contained at least one reference (and that this post appeared in said dataset of March 2015).

As a side effect of the analysis, the inventors identified automatic promotions in the dataset. In general, there were two types of automatic promotions: (1) multiple different users that referenced the same post mostly in its first time-slot (first minute); and (2) a user that referenced the same post multiple times within the same time-slot and/or within different time-slots.

The User-Score measurements allowed the differentiation between effective users from ineffective users. For instance, *ein5er* received low User-Scores although he published 421 posts that referenced 13 different posts. The intensive attempt to promote a set of posts was not sufficient for *ein5er* to be considered boosting in March 2015. Another example of an ineffective user is *afd_pc_service,* who published 48 posts that referenced other 48 posts. He has been found to be ineffective, since his references were not followed by an "explosion" (i.e., high increase in the number of redistributions).

The methods of the invention can facilitate the prediction of posts popularity, in other words, the methods of the invention may be used to predict whether a post will shortly become popular. If a boosting user references a post, then the probability of such a post to become popular is relatively high.

While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the spirit of the invention or exceeding the scope of the claims.

**Claims**

1.  A method for determining post-boosting users in social networks, which comprises the steps of:

a. defining plurality of time slots $S$;

b. defining redistribution of author posts where an author post is denoted by $P_x$ and a redistributing of said author post either directly or indirectly is denoted by $P_y$;

c. for a specific author post, determining the number of redistributions of this author post, respectively, within each of one or more time slots that follow the time of posting of $P_x$;

d. calculating a *Redistribution-Score* for each specific author post $P_x$ based on the number of following redistributions of this author post;

e. granting a *User-Score* to respective non-author users based on said calculated *Redistribution -score*;

f. repeating over time said steps (c) - (e), for additional author posts; and

g. identifying each non-author user that over time accumulated a *User-Score* above a predefined level as a boosting user.

2. A method according to claim 1, wherein said *Redistribution -Score* is computed by:

    a. defining a JUMP rate, namely a rate of fast increase in a number of redistributions of said author post;

    b. determining the number of redistributions $Py$ of each author post $P_x$, respectively, within each time slot; and

    c. upon identification of a large increase in the number of redistributions $Py$ of said author post $P_x$ above said JUMP rate within a time slot $Si$, identifying all those non-author users that redistributed the author post $P_x$ during the previous slot $S_{i-1}$, and granting a *User-Score* to each of said identified users, while terminating the grant of *User-Scores* for said specific author post $P_x$ in all succeeding time slots.

3. A method according to claim 1, wherein said *Redistribution-Score* is calculated by:

    a. for each specific post $P_x$, inspecting the number of redistributions $P_y$ within each time slot from several time slots that succeed the time of issuance of $P_x$; and

    b. increasing the value of said *Redistribution-Score* in a combined manner which is (i) directly proportional to the number of redistributions $Py$ in one or more of time slots that succeed the time slot for which said *Redistribution-Score* is calculated; and (ii) inversely proportional to the duration that was passed since the time of posting of $P_x$.

4. A method according to claim 1, which is performed on a ready to use database, which is accumulated from a past analysis.

5. A method according to claim 4, wherein the database is at least partially prepared by means of crawling software.

6. A method according to claim 1, wherein the durations of the time slots are increased over the time that was passed since the time of posting of the author post $P_x$.

7. A method according to claim 1, wherein the accumulation of *User - Scores* in step (f) is involves summation or average.

10

## Fig. 1

Fig. 2

Fig. 3

Europäisches
Patentamt

European
Patent Office

Office européen
des brevets

# EUROPEAN SEARCH REPORT

Application Number

EP 16 00 2577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/066642 A1 (GOOGLE INC [US]) 1 May 2014 (2014-05-01) * paragraph [0047] - paragraph [0052]; claims 1-7; figures 1-5 * ----- | 1-7 | INV. G06Q10/00 G06Q50/00 |
| X | US 2014/337328 A1 (SARVABHOTLA KIRAN [IN] ET AL) 13 November 2014 (2014-11-13) * paragraph [0040] - paragraph [0049]; claims 1-6; figures 1-4 * ----- | 1-7 | |
| X | US 8 606 792 B1 (JACKSON TODD [US] ET AL) 10 December 2013 (2013-12-10) * claim 1; figures 1-13 * ----- | 1-7 | |

TECHNICAL FIELDS
SEARCHED (IPC)

G06Q
G06F
H04L

The present search report has been drawn up for all claims

| Place of search | Date of completion of the search | Examiner |
|---|---|---|
| Munich | 6 February 2017 | Viets, Ana |

## ANNEX TO THE EUROPEAN SEARCH REPORT
## ON EUROPEAN PATENT APPLICATION NO.

EP 16 00 2577

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2017

| Patent document cited in search report | | | Publication date | Patent family member(s) | | | Publication date |
|---|---|---|---|---|---|---|---|
| WO 2014066642 | A1 | | 01-05-2014 | CN | 104854619 | A | 19-08-2015 |
| | | | | EP | 2912627 | A1 | 02-09-2015 |
| | | | | US | 2014122584 | A1 | 01-05-2014 |
| | | | | WO | 2014066642 | A1 | 01-05-2014 |
| US 2014337328 | A1 | | 13-11-2014 | NONE | | | |
| US 8606792 | B1 | | 10-12-2013 | US | 8606792 | B1 | 10-12-2013 |
| | | | | US | 8983974 | B1 | 17-03-2015 |
| | | | | US | 9442989 | B1 | 13-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Finding Influentials Based on the Temporal Order of Information Adoption In Twitter. **LEE ; KWAK ; PARK ; MOON, LEE, C. ; KWAK, H. ; PARK, H. ; MOON, S.** Proceedings of the 19th international conference on World wide web. ACM, 2010

- **BAKSHY, E. ; HOFMAN, J. M. ; MASON, W. A. ; WATTS, D. J.** Everyone's an Influencer: Quantifying Influence on Twitter. *Proceedings of the Fourth, ACM International Conference on Web Search and Data Mining,* 2011
- **SUN, B. ; NG, V. T.** Identifying Influential Users by Their Postings in Social Networks, Ubiquitous Social Media Analysis. Springer, 2013, 128-151